# EUROPÄISCHE PATENTSCHRIFT

(11) **EP 0 627 355 B1**
(45) Veröffentlichungstag und Bekanntmachung des Hinweises auf die Patenterteilung: **27.08.1997**
(21) Anmeldenummer: 93108762.1
(22) Anmeldetag: 01.06.1993
(51) Int. Cl.: B65D 33/02, B65B 9/20

(54) **Vorrichtung zur Herstellung von Schlauchbeuteln**
Apparatus for making tubular bags
Dispositif de fabrication de sacs tubulaires

(43) Veröffentlichungstag der Anmeldung: 07.12.1994
(73) Patentinhaber: Rovema Verpackungsmaschinen GmbH, 35463 Fernwald (DE)
(72) Erfinder: Hofmann, Peter, Dipl.-Ing., W-6301 Biebertal, Rodheim (DE)

(56) Entgegenhaltungen:
- EP-A- 0 197 875
- US-A- 4 986 054

## Beschreibung

Die Erfindungen betrifft eine Vorrichtung gemäß dem Oberbegriff des Anspruchs 1. Schlauchbeutel werden z.B. aus einem siegelfähigen Werkstoff hergestellt, mit einem als Standfläche geeigneten Boden, insbesondere mit einem Klotzboden, und eckigen, vorzugsweise rechteckigen Querschnitts, mit relativ formstabilen, mindestens teilweise ebenen Seitenwänden mit mindestens einer Längssiegelnaht, während der Boden außerdem mit einer Quersiegelnaht versehen ist.

Schlauchbeutel dieser Art sind recht standsicher und formstabil, wenn das Verpackungsgut von geeigneter Beschaffenheit ist, und die Seitenwände des Schlauchbeutels selbst genügend verformungssteif sind; auch deren Höhe spielt dabei eine Rolle. Die Flexibilität des Ausgangswerkstoffes für den Schlauchbeutel setzt dabei gewisse Grenzen; in vielen Fällen neigt das Fertigprodukt dazu, daß sich die Seitenwände ausbeulen und die Kanten runden; die Schlauchbeutel verlieren ihre ursprüngliche Form, werden standunsicher und unansehnlich und als Träger von Produktinformationen usw. ungeeignet. Die Schlauchbeutel müssen deshalb in solchen Fällen umverpackt werden, beispielsweise in einen Faltkarton. Damit entsteht ein eigentlich unvertretbarer Verpackungsaufwand für die Einzelverpackung. Werden sie hingegen nicht umverpackt, dann tritt selbst bei der Transportverpackung unnötiger Aufwand ein, weil der Raumbedarf relativ formloser bzw. formstabiler Schlauchbeutel viel höher ist als bei solchen mit regelrechtem, gleichbleibendem Umriß.

Aus der EP-OS 0 197 875 ist eine Vorrichtung gemäß dem Oberbegriff des Anspruchs 1 bekannt. Diese Vorrichtung weist keine zum Schlauchbeutel symmetrisch anliegende Einrichtung zur Verschweißung der Längskanten der Schlauchbeutel auf.

Gelöst ist die Aufgabe gemäß dem kennzeichnenden Teil des Anspruchs 1.

Aus der DE-OS 26 39 459 ist es zwar bekannt, versteifende Siegelnähte an den Seitenflächen eines Beutels vorzusehen, der aus einem heißversiegelbaren Zuschnitt hergestellt wird. Diese Siegelnähte über zwei aus der Ebene der Seitenwände abgekantete Falzenden haben aber den Nachteil, daß sie gleichzeitig zur Abdichtung der Verpackung dienen und demzufolge nur begrenzt belastbar sind. Im Gegensatz dazu müssen die Siegelnähte nach der Erfindung keine dichtende Funktion ausüben, sie können demzufolge gegebenenfalls auch in unterbrochener Anordnung ausgeführt sein, und es werden keine Anforderungen an ihre absolute Dichtheit gestellt. Darüber hinaus ist ein aus der DE-OS 26 39 459 vorbekannter Beutel nicht als Schlauchbeutel, insbesondere nicht in kontinuierlicher Fließfertigung herstellbar.

Für die Herstellung eines derartigen Schlauchbeutels eignet sich ein Verfahren bei dem im Bereich der Kanten die Seitenwände so aus ihrer Ebene nach außen gewölbt werden, daß ihre die Kanten begrenzenden, aneinanderstoßenden Bereiche mit ihren Innenflächen streifenförmig aufeinanderliegen und dabei miteinander durch auf die zugehörigen Außenflächen einwirkende Siegelwerkzeuge versiegelt werden. Es ist zweckmäßig, daß die Bereiche so versiegelt werden, daß die Siegelnähte von den Kanten beabstandet sind. Besonders rationell ist es, wenn die Siegelnähte mit Hilfe von Siegelbändern oder -rollen ausgeführt werden.

Da die Siegelnähte, wie erwähnt, keinerlei abdichtende Aufgaben zu erfüllen haben, können sie sehr schmal gehalten werden, zugunsten der erforderlichen Breite der Folienbahn.

Es ist besonders günstig, wenn die Siegelnähte hergestellt werden, während der Schlauchbeutel über ein Füllrohr zu seiner Befüllung mit Verpackungsgut gleitet.

Ferner ist es möglich, daß im späteren Bereich der Kanten bereits auf die Folienbahn Verstärkungen aufgebracht werden.

Bei der Vorrichtung zur Schlauchbeutelherstellung ist der Querschnitt des Füllrohres dem Querschnitt des Schlauchbeutels angepaßt und etwas kleiner als dieser, wobei an allen Längskanten des Füllrohres radial von den Längskanten weg ausgerichtete Spreizelemente so befestigt sind, daß in deren Umgebung die Seitenwände des Schlauchbeutels aus ihrer Ebene nach außen gewölbt werden. Dabei enden die Spreizelemente soweit von den Längskanten des Füllrohres entfernt, daß die Seitenwände in deren Kantenbereich durch die Siegelwerkzeuge laufen. In einer bevorzugten Ausführungsform dienen als Spreizelemente kurze Formbleche, die mit einer Formspitze versehen sind, die - in Transportrichtung des Hüllstoffschlauches gesehen - vor den Siegelwerkzeugen soweit in den Siegelbereich ragen, daß die Kanten des Schlauchbeutels selbst nicht in die Siegelwerkzeuge geraten. In einfacher Weise dienen als Spreizelemente auch kurze Formbleche, die mit einer Formspitze versehen sind, die - in Transportrichtung des Hüllstoffschlauches gesehen - hinter den Siegelwerkzeugen fast bis zu den Siegelnähten reichen. Es ist günstig, wenn jeder Kante ein Siegelwerkzeug zugeordnet ist und kontinuierlich arbeitende Siegelwerkzeuge vorgesehen sind.

Insbesondere die bevorzugten Spreizelemente sorgen dafür, daß die Abrundungen der Kanten an dem Schlauchbeutel minimiert werden und dadurch die Seitenwände scharfe und genau parallele Begrenzungen erfahren. Auf diese Weise entsteht also nicht nur eine formstabile, sondern auch eine formschöne Verpackung mit einem geringen Aufwand sowohl an Verpackungsmaterial für die Produkt- als auch für die Transportverpackung.

Die Erfindung wird nachstehend an Hand der Zeichnungen an einem Ausführungsbeispiel näher erläutert. Es zeigen
- Figur 1: einen erfindungsgemäßen Schlauchbeutel mit verfülltem Verpackungsgut und verschlossen in perspektivischer Darstellung,
- Figur 2: einen Querschnitt durch einen Schlauchbeutel gemäß Figur 2 während seiner Herstellung,
- Figur 3: einen Schnitt A - A aus Figur 2, stark vergrößert und
- Figur 4: in schematischem Querschnitt einen etwas abgewandelten Schlauchbeutel, sämtlich in vereinfachter Darstellung.

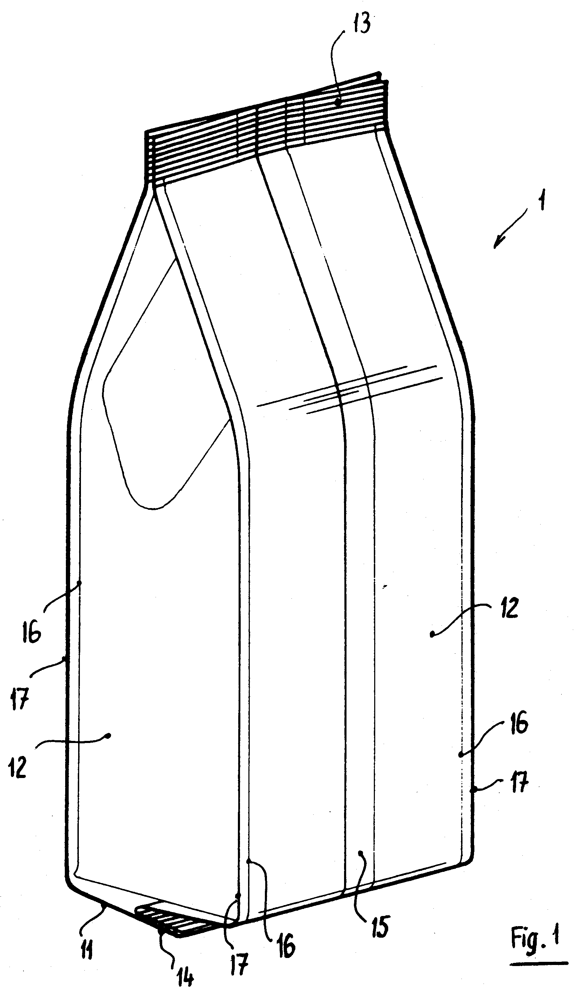

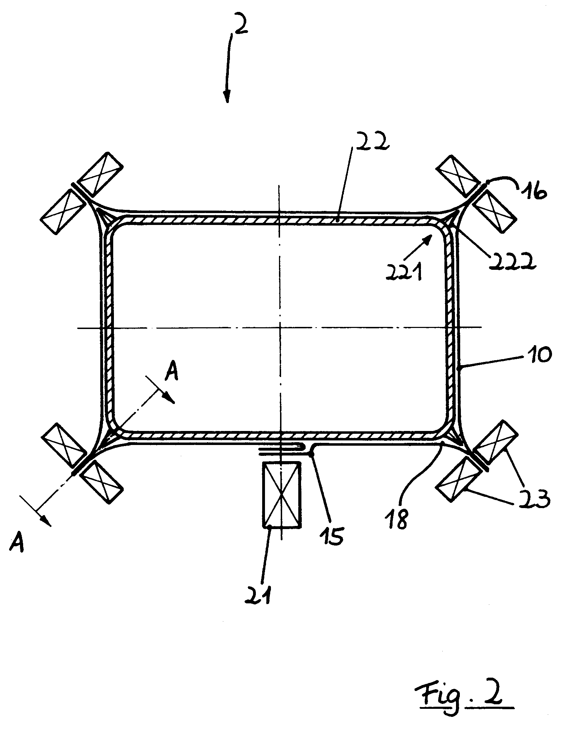

Ein Schlauchbeutel 1 besteht aus einem als Standfläche dienenden Klotzboden 11 und Seitenwänden 12, die im Schließbereich giebelartig gefaltet und mit einer Quersiegelnaht 13 verschlossen sind; eine weitere Quersiegelnaht 14 ist in dem Klotzboden 11 zu erkennen, während eine Längssiegelnaht 15 erforderlich ist, um einen Hüllstoffschlauch 10 zu gewinnen (Figur 2). Die Quersiegelnähte 13 und 14 und gegebenenfalls auch die Längssiegelnaht 15 sind dabei durch Umschlag mit Hilfe sogenannter Seitenstecher so gefaltet, daß vier Lagen der Folienbahn übereinanderliegen, wie in Figur 1 und 2 zu erkennen ist. Auf diese Weise entsteht unter anderem der relativ ebene Klotzboden 11, der wesentlich zur Standsicherheit des Schlauchbeutels beiträgt.

Die Seitenwände 12 sind im wesentlichen bis auf die Faltung des Schließbereiches und jedenfalls vor dieser Faltung ebene rechteckige Flächen, die in Kanten 16 aneinanderstoßen. Die Kanten 16 sind dabei allesamt mit Verstärkungen 17 versehen, die aus Siegelnähten an zwei aufeinanderliegenden streifenförmigen Innenflächen 18 der Seitenwände 12 gebildet sind. In der Figur 1 ist deutlich ersichtlich, wie schmal diese Verstärkungen dadurch gehalten werden können, daß die Siegelnähte nicht abdichten müssen.

In Figur 2 ist zu erkennen, wie diese Siegelnähte hergestellt werden. Der Hüllstoffschlauch 10, dessen Längssiegelnaht 15 bereits mittels eines Längssiegelwerkzeuges 21 erzeugt wurde, läuft über ein Füllrohr 22, das ebenso wie das Längssiegelwerkzeug 21 Teil einer handelsüblichen Schlauchbeutelmaschine 2 ist. Zu dieser gehören ferner Siegelwerkzeuge 23, die an den Kanten 16 angeordnet sind, etwa in Form von Schweißrollen. Die Siegelwerkzeuge 23 sind ebenso wie das Längssiegelwerkzeug 21 nur schematisch angedeutet, sie sind fachüblich und bedürfen keiner weiteren Erläuterung.

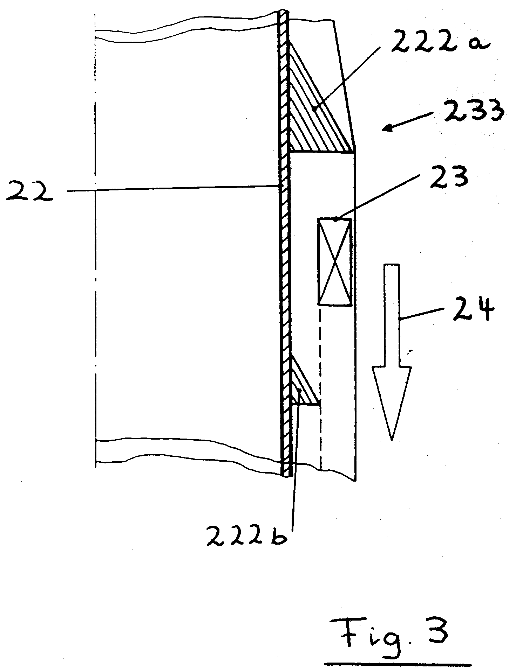

An dem Füllrohr 22, das in bekannter Weise zur Befüllung des Schlauchbeutels 1 dient, in seinem Querschnitt diesem angepaßt und so dimensioniert ist, daß der Hüllstoffschlauch 10 ohne weiteres darüber hinweggezogen werden kann, befinden sich an seinen Längskanten 221 Spreizelemente 222, die diagonal nach außen weisen; sie bestehen aus Blech, haben eine Formspitze 223 und sind an dem Füllrohr 22 beispielsweise angeschweißt. In der Figur 3 ist ihre Funktion zu erkennen. Ein erstes Spreizelement 222a befindet sich in Transportrichtung 24 des Hüllstoffschlauches 10 vor dem Siegelwerkzeug 23, so daß die Kante 16 von der Formspitze 223 sowohl erzeugt als auch soweit von dem rechteckigen Querschnitt des Hüllstoffschlauches 10 weggeführt wird, daß eine Siegelung der aufeinanderliegenden Innenflächen 18 erfolgen kann. Ein weiteres Spreizelement 222b hinter dem Siegelwerkzeug 23 ist demgegenüber verkürzt und reicht nur etwa bis zu der Siegelnaht, die in der Figur 3 gestrichtelt angedeutet ist. Auf diese Weise wird insgesamt der Hüllstoffschlauch 10 so geführt, daß eine einwandfreie Formgebung des Schlauchbeutels 1 erfolgt.

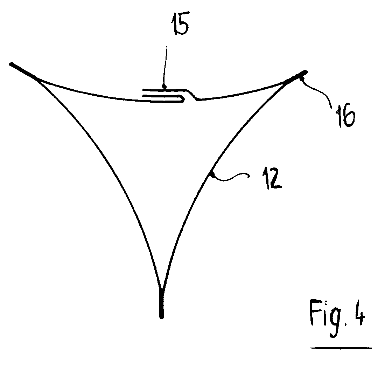

Wie in Figur 4 am Beispiel einer dreieckigen Verpackung gezeigt, ist die Erfindung nicht auf Schlauchbeutel 1 rechteckigen Querschnitts begrenzt, sondern setzt lediglich voraus, daß ein solcher Schlauchbeutel 1 symmetrisch bzgl. seines Querschnitts ist (Summe der Verzugskräfte gleich Null), und daß er mit Kanten versehen ist.

## Patentansprüche

1. Vorrichtung zur Herstellung von standfähigen Schlauchbeuteln mit einer Formschulter zum Umformen einer ebenen Folienbahn zu einem Hüllstoffschlauch, einem vom Hüllstoffschlauch umgebenen Füllrohr, mit Spreizelementen zum Spreizen des Folienschlauches, sowie mit Siegelwerkzeugen zum Verschweißen der Längssiegelnaht, der Quersiegelnaht und der gespreizten Kanten eines Schlauchbeutels, dadurch gekennzeichnet, daß der Querschnitt des Füllrohres (22) dem Querschnitt des Schlauchbeutels (1) angepaßt und etwas kleiner als dieser ist, daß das Füllrohr Längskanten (221) aufweist und an allen Längskanten des Füllrohres (22) radial von der Längskanten (22) weg ausgerichtete Spreizelemente (222) so befestigt sind, daß in deren Umgebung die Seitenwände (12) des Schlauchbeutels (1) aus ihrer Ebene nach außen gewölbt werden, und daß die Spreizelemente (222) soweit von den Längskanten (221) des Füllrohres (22) entfernt enden, daß die Seitenwände (12) in deren Kantenbereich durch die Siegelwerkzeuge (23) laufen.

2. Vorrichtung nach Anspruch 1, dadurch gekennzeichnet, daß als Spreizelemente (222a) kurze Formbleche dienen, die mit einer Formspitze (223) versehen sind, die - in Transportrichtung des Hüllstoffschlauches (10) gesehen - vor den Siegelwerkzeugen (23) soweit in den Siegelbereich ragen, daß die Kanten (16) des Schlauchbeutels (1) selbst nicht in die Siegelwerkzeuge (23) geraten.

3. Vorrichtung nach Anspruch 1, dadurch gekennzeichnet, daß als Spreizelemente (222b) kurze Formbleche dienen, die mit einer Formspitze (223) versehen sind, die - in Transportrichtung des Hüllstoffschlauches (10) gesehen - hinter den Siegelwerkzeugen (23) fast bis zu den Siegelnähten reichen.

4. Vorrichtung nach Anspruch 1, Anspruch 2 oder Anspruch 3, dadurch gekennzeichnet, daß jeder Kante (16) ein Siegelwerkzeug (23) zugeordnet ist.

5. Vorrichtung nach Anspruch 4, dadurch gekennzeichnet, daß kontinuierlich arbeitende Siegelwerkzeuge (23) und ein kontinuierlich arbeitender Folienabzug vorgesehen sind.

6. Vorrichtung nach Anspruch 5, dadurch gekennzeichnet, daß Siegelbänder oder -rollen als Siegelwerkzeuge (23) vorgesehen sind.

7. Vorrichtung nach Anspruch 1, dadurch gekennzeichnet, daß eine Einrichtung zum Aufbringen von Verstärkungen auf die Folienbahn vorgesehen ist, die vor dem späteren Bereich der zu verstärkenden Kanten (16) positioniert ist.

## Claims

1. A device for manufacturing stand-up skin-type bags having a forming shoulder for forming a planar foil web into a sheathing material skin, a filling tube surrounded by the sheathing material skin, spreading elements for spreading the foil skin, and sealing tools for sealing the longitudinal sealing seam, the transverse sealing seam and the spread edges of a skin-type bag, characterized in that the cross-section of the filling tube (22) is matched to the cross-section of the skin-type bag (1) and is somewhat smaller than the latter, in that the filling tube has longitudinal edges (221), and spreading elements (222) directed radially away from the longitudinal edges (22) are secured to all the longitudinal edges of the filling tube (22) such that in the vicinity thereof the side walls (12) of the skin-type bag (1) are curved outwards, out of their plane, and in that the spreading elements (222) end far enough from the longitudinal edges (221) of the filling tube (22) for the side walls (12) to run through the sealing tools (23) in their edge region.

2. A device according to Claim 1, characterized in that there serve as the spreading elements (222a) short profiled sheets which are provided with a profiled tip (223) which upstream of the sealing tools (23) as seen in the direction of transport of the sheathing material skin (10) project into the sealing region to such an extent that the edges (16) of the skin-type bag (1) do not themselves reach into the sealing tools (23).

3. A device according to Claim 1, characterized in that there serve as the spreading elements (222b) short profiled sheets which are provided with a profiled tip (223) which downstream of the sealing tools (23) as seen in the direction of transport of the sheathing material skin (10) project almost as far as the sealing seams.

4. A device according to Claim 1, Claim 2 or Claim 3, characterized in that each edge (16) has a sealing tool (23) associated therewith.

5. A device according to Claim 4, characterized in that continuously operating sealing tools (23) and a continuously operating foil draw-off means are provided.

6. A device according to Claim 5, characterized in that sealing strips or rolls are provided as the sealing tools (23).

7. A device according to Claim 1, characterized in that a means of applying reinforcing portions to the foil web is provided and is positioned upstream of the region further down for the edges (16) to be reinforced.

## Revendications

1. Dispositif de fabrication de sacs tubulaires, tenant debout, avec un épaulement de formage, destiné à conformer une bande de feuille plane pour donner un tuyau en matériau d'enveloppement, une garniture tubulaire entouré par le tuyau en matériau d'enveloppement, avec des éléments d'écartement destinés à écarter le tuyau en feuille, ainsi qu'avec des outils de scellage pour souder le cordon de scellage longitudinal, le cordon de scellage transversal et les arêtes écartées d'un sac tubulaire, en caractérisé en ce que la section transversale de la garniture tubulaire (22) est adaptée à la section transversale du sac tubulaire (1) et est un peu inférieure à celle-ci, en ce que la garniture tububaire présente des arêtes longitudinales (221) et, sur toutes les arêtes longitudinales de la garniture tubulaire (22), sont fixés des éléments d'écartement (222), orientés pour s'écarter radialement des arêtes longitudinales (22) de manière que, dans leur environnement, les parois latérales (12) du sac tubulaire (1) soient incurvées vers l'extérieur à partir de leur plan, et en ce que les éléments d'écartement (222) sont éloignés des arêtes longitudinales (221) de la garniture tubulaire (22), de manière que les parois latérales (12) courent dans leur zone d'arêtes en passant par les outils de scellage (23).

2. Dispositif selon la revendication 1, caractérisé en ce que l'on utilise comme éléments d'écartement (222a) des tôles de formage courtes, qui sont pourvues d'une pointe de formage (223), qui pénètre - en observant la direction de transport du tuyau en matériau d'enveloppement (10) - devant les outils de scellage (23) dans la zone de scellage, de manière que les arêtes (16) du tuyau du sac tubulaire (10) elles-mêmes n'arrivent pas dans les outils de scellage (23).

3. Dispositif selon la revendication 1, caractérisé en ce que l'on utilise comme éléments d'écartement (222b) de courtes tôles de formage pourvues d'une pointe de formage (223), tôles qui - en observant dans la direction de transport du tuyau en matériau d'enveloppement (10) - arrivent derrière les outils de scellage (23), presque jusqu'aux cordons de scellage.

4. Dispositif selon la revendication 1, la revendication 2 ou la revendication 3, caractérisé en ce qu'a chaque arête (16) est associé un outil de scellage (23).

5. Dispositif selon la revendication 4, caractérisé en ce que sont prévus des outils de scellage (23) travaillant en continu et une extraction de feuille travaillant en continu.

6. Dispositif selon la revendication 5, caractérisé en ce que des bandes ou des rouleaux de scellage sont prévus à titre d'outils de scellage (23).

7. Dispositif selon la revendication 1, caractérisé en ce qu'un dispositif, destiné à appliquer des renforcements sur la bande de feuille, est prévu et est positionné devant la zone qui sera ultérieurement celle des arêtes (16) à renforcer.
